# EUROPÄISCHE PATENTSCHRIFT

(11) **EP 0 607 154 B1**
(45) Veröffentlichungstag und Bekanntmachung des Hinweises auf die Patenterteilung: **18.09.1996**
(21) Anmeldenummer: 92914900.3
(22) Anmeldetag: 09.07.1992
(51) Int. Cl.: F02G 1/053, F02B 75/06, F16H 21/32

(54) **ENERGIEWANDLER NACH DEM PRINZIP DES HEISSLUFTMOTORS**
ENERGY CONVERTER ON THE HOT-AIR ENGINE PRINCIPLE
CONVERTISSEUR D'ENERGIE SELON LE PRINCIPE DU MOTEUR A AIR CHAUD

(43) Veröffentlichungstag der Anmeldung: 27.07.1994
(73) Patentinhaber: Saarberg Hydraulik GmbH, 66540 Neunkirchen-Heinitz (DE)
(72) Erfinder: CARLQVIST, Stig, G., (verstorben) (SE)
(86) Internationale Anmeldenummer: EP9201556
(87) Internationale Veröffentlichungsnummer: WO9401670

(56) Entgegenhaltungen:
- WO-A-92/08043
- FR-A- 1 213 644
- GB-A- 987 687
- US-A- 3 220 177
- DATABASE WPIL Week 9240, Derwent Publications Ltd., London, GB; AN 92-297481 & SE-A-467 792 (CMCC) 14. September 1992
- PROCEEDINGS OF THE 25TH INTERSOCIETY ENERGY CONVERSION ENGINEERING CONFERENCE 12. August 1990, RENO , XP214898 CARLQVIST 'Study of 4-cylinder, double-acting and hermetically sealed stirling engine'

## Beschreibung

Die Erfindung betrifft einen Energiewandler nach dem Prinzip des Heißluftmotors (Stirlingmotor, Ericssonmotor), der einen Zylinder aufweist, der einen Arbeitskolben und einen Verdrängerkolben enthält, die jeweils vor und zurück auf der Achse des Zylinders verschiebbar sind und jeweils eine Kolbenstangeneinrichtung besitzen, die mit jeweils einem Gelenksystem über Pleuelstangen mit zwei parallelen, synchron in entgegengesetzten Richtungen rotierenden Kurbeln solcherart verbunden ist, daß der Verdrängerkolben phasenverschoben zum Arbeitskolben bewegt wird.

Ein bekannter solcher Energiewandler vom Stirling-Typ hat einen sogenannten rhombischen Kurbelmechanismus (siehe u.a. US-A-3 220 177).
Die Kolbenstange des Arbeitskolbens ist rohrförmig, und an ihr ist ein oberes Joch befestigt, das sich zwischen dem Zylinder und der Ebene befindet, in der die beiden parallelen Kurbeln liegen. Zwei Pleuelstangen, die mit jeweils einer der Kurbeln verbunden sind, greifen mit Zapfen in die Enden des oberen Jochs ein, so daß eine hin- und hergehende Bewegung des Arbeitskolbens des Zylinders und damit auch des Jochs eine synchrone Rotation der Kurbelwellen in entgegengesetzten Richtungen bewirkt.

Die Kolbenstange des Verdrängerkolbens erstreckt sich durch die rohrförmige Kolbenstange des Arbeitskolbens, und an ihr ist ein unteres Joch befestigt, das sich, bezogen auf den Zylinder, hinter der Ebene der Kurbeln befindet. An den Enden des unteren Jochs sind die Pleuelstangen drehbar angebracht, welche in ihrer jeweiligen Kurbel an dem gleichen Kurbelzapfen angreifen wie die entsprechende Pleuelstange des oberen Jochs. Auch das untere Joch und damit auch der Verdrängerkolben bewegen sich bei der synchronen Rotation der Kurbeln in entgegengesetzter Richtung vor und zurück, jedoch ist ihre Bewegung phasenverschoben im Verhältnis zum oberen Joch. Die Phasenverschiebung kommt dadurch zustande, daß die Pleuelstangen von den Jochen aus schräg nach außen und von den verschiedenen Jochen her aufeinander zu gerichtet sind.

In diesem, auch Rhombengetriebe genannten, Mechanismus werden Gleitlager verwendet, die mit Öl geschmiert werden.

Hierzu wird ein besonderes Zirkulationsschmiersystem verwendet, zu dem eine Ölpumpe und Ölkanäle zu den verschiedenen Schmierstellen gehören, welches den Energiewandler komplizierter macht und verteuert.
Ein anderer Nachteil ist, daß die Ölschmierung dazu führt, daß das Kurbelgehäuse des Energiewandlers mit dem rhombischen Kurbelmechanismus hermetisch gegen den Zylinder des Energiewandlers abgedichtet werden muß, damit sich die Arbeitsgase im Zylinder nicht mit Öl vermischen, was zu einer schädlichen Kontaminierung des Wärmetauschers im Energiewandler führt. Diese Abdichtung ist aufgrund des erforderlichen hohen Drucks des Arbeitsgases schwer zu verwirklichen und verlangt die Anwendung von teueren und komplizierten Dichtungen.
Wegen dieser Nachteile verwendet man möglichst anstelle der ölgeschmierten Gleitlager dauergeschmierte Rollenlager, die kein spezielles Zirkulationsschmiersystem erfordern. Das gilt insbesondere bei der Konstruktion von kleinen, einzylindrigen Energiewandlern, wo der Kostenaspekt eine herausragendere Rolle spielt und die geringere Friktion der Rollenlager merklich positive Effekte ergibt.

Bei größeren Energiewandlern pflegt man bei der Anwendung von dauergeschmierten Rollenlagern mehrzylindrige Konstruktionen zu wählen, in welchen die Kräfte auf eine größere Anzahl von Lagern verteilt werden, die dann einer geringeren Belastung ausgesetzt sind und eine wesentlich verlängerte Lebensdauer erhalten. Der Nachteil solcher mehrzylindriger Konstruktionen ist aber wiederum, daß sie bedeutend teurer und komplizierter als einzylindrige Konstruktionen sind.

Der Erfindung liegt die Aufgabe zugrunde, einen leistungsfähigen einzylindrigen Energiewandler zu schaffen, dessen Lager ohne Schmierung von außen eine lange Lebensdauer haben.

Dieses Ziel wird bei einem Energiewandler der eingangs genannten Art dadurch erreicht, daß das Gelenksystem des Arbeitskolbens ein Rahmenelement umfaßt, welches mindestens vier Zapfen aufweist, die in einer gemeinsamen, zur Zylinderachse rechtwinkligen Ebene symmetrisch zur Zylinderachse angeordnet und parallel zu den Kurbelwellen ausgerichtet sind und an denen jeweils eine Pleuelstange angelenkt ist,
daß das Gelenksystem und/oder die Kolbenstangeneinrichtung des Verdrängerkolbens durch das Rahmenelement hindurchgeführt ist bzw. sind
und daß die Kurbeln als Kurbelwellen gestaltet sind, an denen die Pleuelstangen jeweils an einer Kröpfung angreifen, die jeweils zwischen zwei Kurbelwellenlagern angeordnet sind.

Auf diese Weise wird die Zahl der Lager vergrößert, damit die spezifische Belastung der Lager vermindert und dadurch die Lebensdauer erhöht, so daß man auch bei großen einzylindrigen Energiewandlern mit dauergeschmierten Lagern, vorzugsweise Rollenlagern, auskommt. Für das Gelenksystem des Verdrängerkolbens ist keine Vergrößerung der Lagerzahl notwendig; die Kraft wird weitaus überwiegend, z.B. zu 98%, am Arbeitskolben gewonnen.

Dies erlaubt es, den Mechanismus zusammen mit von den Kurbelwellen angetriebenen Generatoren in einem druckdichten Gehäuse einzukapseln und das Gehäuse mit demselben Gas unter Druck zu füllen, mit dem der Energiewandler arbeitet, meistens Helium oder Wasserstoff. Damit wird Leckverlust an der Hindurchführung der Kolbenstange des Verdrängerkolbens durch den Arbeitskolben vermieden und auch in dieser Beziehung die Lebensdauer des Energiewandlers erhöht.
Der Verzicht auf Zentralschmierung macht es auch möglich, den Motor in jeder Lage zu betreiben. Das ist besonders von Bedeutung für die Art der Beheizung, z.B. ob mit flüssigem oder mit festem Brennstoff oder mit Sonnenenergie durch einen Parabolspiegel, wenn der Energiewandler dessen Bewegung folgen muß.

Die vorgeschlagene Lösung kann auf ein Rhombengetriebe angewandt werden. In diesem Falle liegen alle Kröpfungen der Kurbelwellen gleich.

Vorzugsweise sind jedoch statt der schrägen Anordnung der Pleuelstangen die mit dem Gelenksystem des Arbeitskolbens verbundenen und die mit dem Gelenksystem des Verdrängerkolbens verbundenen Kröpfungen der Kurbelwellen entsprechend den unterschiedlichen Bewegungen, die die beiden Kolben ausführen sollen, winkelversetzt. Es ist aber auch eine Kombination von beiden Prinzipien denkbar, auch nur teilweise.

Die winkelversetzten Kröpfungen haben ferner in Verbindung mit dem Rahmenelement den Vorteil, daß beide Gelenksysteme von derselben Seite her auf die Kurbelwellen arbeiten können. Das Gelenksystem des Verdrängerkolbens, vorzugsweise ein Joch mit zwei Pleuelstangen, hat in dem Rahmenelement des Arbeitskolbens Platz und Bewegungsraum. Die gesamte Vorrichtung kann dadurch kompakter werden, ein wichtiger Vorteil für beweglichen Einsatz des Energiewandlers.

Die Kolbenstangeneinrichtung des Arbeitskolbens besteht zweckmäßigerweise aus zwei Kolbenstangen, die symmetrisch zur Zylinderachse am Arbeitskolben befestigt sind.

Die Zeichnungen geben ein Ausführungsbeispiel der Erfindung wieder.
Fig. 1 zeigt einen Stirling-Motor in einem axialen Schnitt,
Fig. 2 zeigt den Stirling-Motor in einem zu Fig. 1 senkrechten axialen Schnitt,

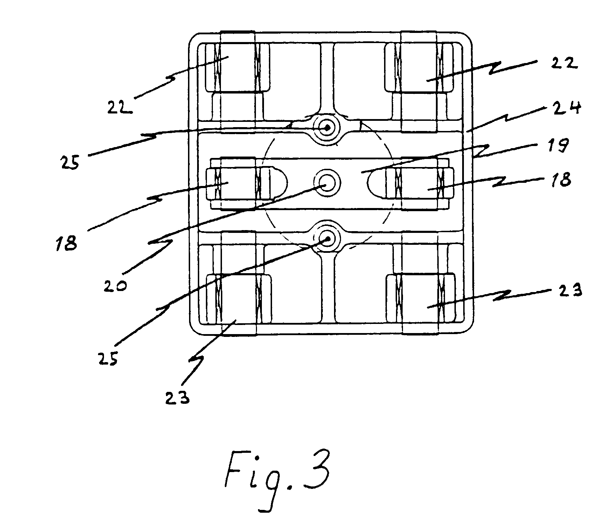

Fig. 3 zeigt den Stirling-Motor in einem Schnitt nach Linie III-III in Fig. 1 und 2 und

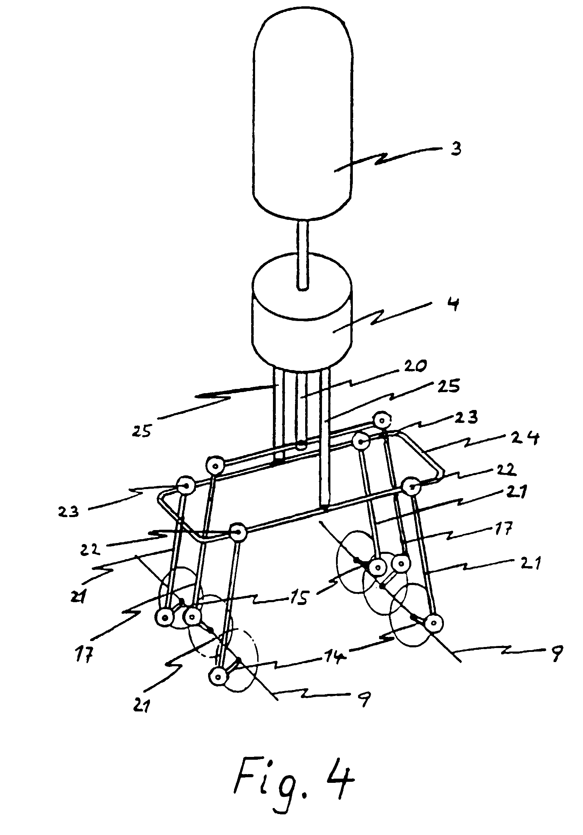

Fig. 4 zeigt den Stirling-Motor im Schema.

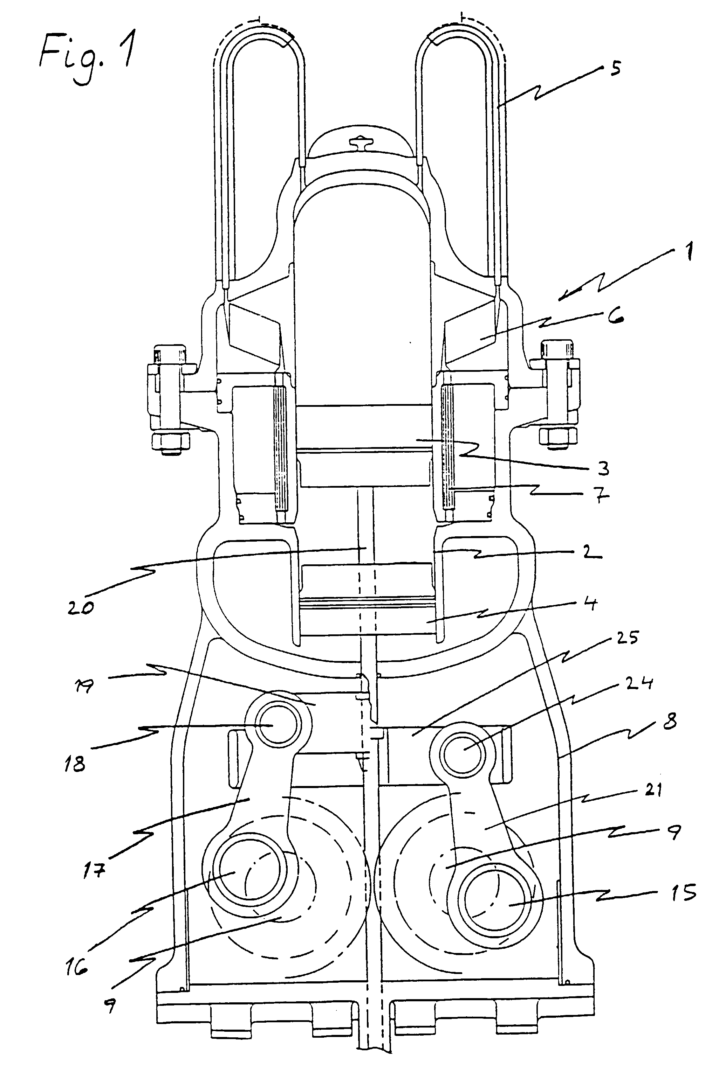

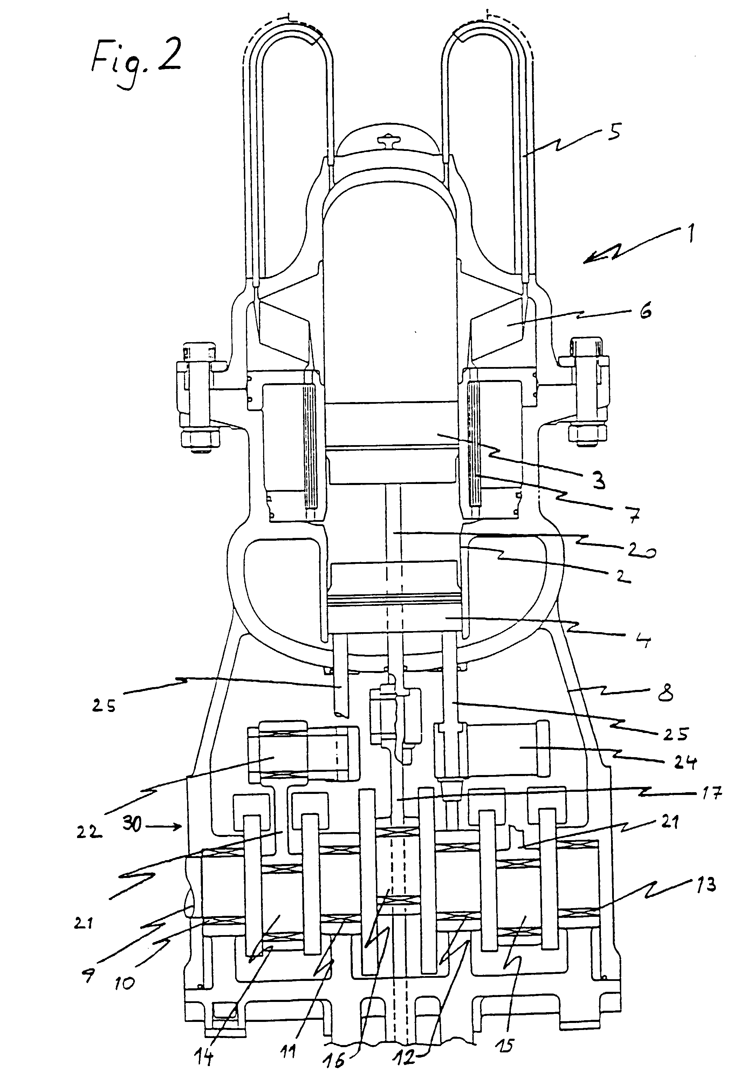

Der Stirling-Motor 1 besitzt einen Zylinder 2, in welchem ein Verdrängerkolben 3 und ein Arbeitskolben 4 angeordnet sind. Oben in Fig. 1 und 2 sind Wärmerohre 5 zu erkennen, die sich in einer nicht gezeigten Brennkammer befinden und den Zylinderraum oberhalb des Verdrängerkolbens 3 mit der Außenseite eines ringförmigen Regenerators 6 verbinden, der den Zylinder 2 umgibt. Die Innenseite des Regenerators 6 hat Verbindung mit einer Kammer, in welcher ein Kühler 7 angeordnet ist, welcher seinerseits in Verbindung mit dem Zylinderraum unter dem Verdrängerkolben 3 in Verbindung steht.

Des näheren kann zum Aufbau und zur Funktion des Stirling-Motors verwiesen werden auf Werdlich, Martin: "Stirling-Maschinen: Grundlagen, Technik, Anwendung", ökobuch 1991, ISBN 3-922964-35-4, sowie auf Künzel, Manfred: "Stirlingmotor der Zukunft", VDI-Verlag 1986, wo im übrigen jeweils auch das Rhombengetriebe dargestellt und beschrieben ist.

Im Kurbelgehäuse 8 des Stirling-Motors sind zwei parallele Kurbelwellen 9 symmetrisch zur Achse des Zylinders 2 und rechtwinklig zu ihr angeordnet.

Jede der Kurbelwellen hat zwischen vier Lagern 10,11,12,13 drei Kröpfungen 14,15,16. Die Kröpfungen 14 und 15 sind in einer Ebene miteinander angeordnet, während die dritte Kröpfung 16 winkelversetzt zu ihnen ausgerichtet ist. Die Kröpfungsanordnung der Kurbelwellen ist spiegelsymmetrisch zu einer Ebene, die sich durch die Zylinderachse erstreckt.

Die mittlere Kröpfung 16 ist jeweils drehbar mit dem einen Pleuelauge einer Pleuelstange 17 verbunden, deren anderes Pleuelauge drehbar auf einen am einen Joch 19 angeordneten Zapfen 18 greift.

Das Joch 19 ist spiegelsymmetrisch zur Ebene der Zylinderachse und die Zapfen 18 an seinen Enden sind parallel zu den Kurbelwellen 9 ausgerichtet. In der Mitte des Jochs ist eine Kolbenstange 20 starr befestigt, die sich koaxial und abgedichtet durch den Arbeitskolben 4 erstreckt und an der Unterseite des Verdrängerkolbens 3 befestigt ist.

Die übrigen Kröpfungen 14 und 15 der Kurbelwelle 9 sind drehbar mit dem einen Pleuelauge jeweils einer Pleuelstange 21 verbunden, deren anderes Pleuelauge drehbar auf einen an einem Rahmenelement 24 angeordneten Zapfen 22,23 greift. Das Rahmenelement 24 ist spiegelsymmetrisch zur Ebene der Zylinderachse und die Zapfen 22 und 23 sind paarweise angeordnet und parallel zu den Kurbelwellen 9 ausgerichtet. Der Abstand der den verschiedenen Kurbelwellen 9 zugeordneten Zapfenpaare 22,23 voneinander ist ebenso wie der Abstand der Zapfen 18 voneinander gleich dem Abstand, den die Kurbelwellen 9 in ihren Lagern 10-13 voneinander haben.

Das Rahmenelement 24 ist als ein sehr steifes Fachwerk ausgebildet mit einer zentralen Öffnung, die ausreichend groß ist, um einen ungehinderten Durchtritt des Jochs 19 in Richtung der Zylinderachse zu erlauben. An einander gegenüberliegenden Seiten der zentralen Öffnung sind zwei Kolbenstangen 25 befestigt, die in einer Ebene mit der Zylinderachse liegen und die parallel zueinander in gleichem Abstand von dieser Achse angeordnet sind. Die Kolbenstangen 25 erstrecken sich, ebenso wie die Kolbenstange 20, abgedichtet durch eine Wand, die einen unterschiedlichen Gasdruck im Zylinderraum des Motors und im Kurbelwellenraum ermöglicht, und sind mit der Unterseite des Arbeitskolbens 4 verbunden.

Alle Lager 10,11,12,13 sowie die Lager der Pleuelstangen sind gekapselte, dauergeschmierte Rollenlager, die völlig wartungsfrei sind und die dank der großen Anzahl der Lager nur geringen Lagerbelastungen ausgesetzt sind, wodurch sie eine lange Lebensdauer erhalten.
Bei 30 könnte eine Haube druckdicht an das Kurbelgehäuse 8 angesetzt werden, in der die Kurbelwellen 9 z.B. je einen Generator antreiben. Alle beweglichen Teile sind dann eingekapselt.

Der dargestellte Stirling-Motor ist in erster Linie für stationären Einsatz vorgesehen und kann beispielsweise für den Antrieb eines Generators verwendet werden, der an seine Kurbelwellen gekoppelt wird.
Auch eine Baueinheit mit einer integralen Mehrfach-Anordnung des Stirlingmotors wäre möglich, ggf. in Tandem-Anordnung mit starr verbundenen Rahmenelementen.

## Patentansprüche

1. Energiewandler nach dem Prinzip des Heißluftmotors (Stirling-motor, Ericssonmotor), der einen Zylinder (2) aufweist, der einen Arbeitskolben (4) und einen Verdrängerkolben (3) enthält, die jeweils vor und zurück auf der Achse des Zylinders (2) verschiebbar sind und jeweils eine Kolbenstangeneinrichtung (20,25) besitzen, die mittels jeweils eines Gelenksystems (21-24 bzw. 17-19) über Pleuelstangen (17,21) mit zwei parallelen, synchron in entgegengesetzten Richtungen rotierenden Kurbeln (9) solcherart verbunden sind, daß der Verdrängerkolben phasenverschoben zum Arbeitskolben bewegt wird,
dadurch gekennzeichnet,
daß das Gelenksystem (21-24) des Arbeitskolbens (4) ein mit dessen Kolbenstangeneinrichtung (25) starr verbundenes Rahmenelement (24) umfaßt, welches mindestens vier Zapfen (22,23) aufweist, die in einer gemeinsamen, zur Zylinderachse rechtwinkligen Ebene symmetrisch zur Zylinderachse angeordnet und parallel zu den Kurbelwellen (9) ausgerichtet sind und an denen jeweils eine Pleuelstange (21) angelenkt ist,
daß das Gelenksystem (17-19) und/oder die Kolbenstangeneinrichtung (20) des Verdrängerkolbens (3) durch das Rahmenelement (24) hindurchgeführt ist bzw. sind
und daß die Kurbeln als Kurbelwellen (9) gestaltet sind, an denen die Pleuelstangen (17,21) jeweils an einer Kröpfung (16,14,15) angreifen, die jeweils zwischen zwei Kurbelwellenlagern (11,12) angeordnet sind.

2. Energiewandler nach Anspruch 1,
dadurch gekennzeichnet,
daß die mit dem Gelenksystem (21-24) des Arbeitskolbens (4) verbundenen und die mit dem Gelenksystem des Verdrängerkolbens (3) verbundenen Kröpfungen (14, bzw. 16 und 15) der Kurbelwellen (9) zueinander winkelversetzt sind.

3. Energiewandler nach Anspruch 1 oder 2,
dadurch gekennzeichnet,
daß die Kolbenstangeneinrichtung (25) des Arbeitskolbens (4) zwei Kolbenstangen aufweist, die symmetrisch zur Zylinderachse am Arbeitskolben (4) befestigt sind.

4. Energiewandler nach einem der Ansprüche 1 bis 3,
dadurch gekennzeichnet,
daß die Gelenksysteme und Kurbelwellen zusammen mit einem mit beiden Kurbelwellen verbundenen Generator oder je einem mit den Kurbelwellen verbundenen Generator in einem dichten Gesamt-Gehäuse angeordnet sind, das mit dem Gas, mit dem der Energiewandler arbeitet, gefüllt ist.

5. Energiewandler nach einem der Ansprüche 1 bis 4,
dadurch gekennzeichnet,
daß alle genannten Lager (10-13,14-16,18,22,23) dauergeschmierte Rollenlager oder Nadellager sind.

## Claims

1. Energy converter working on the principle of the hot-air engine (Stirling engine, Ericsson engine), which exhibits a cylinder (2) which contains a working piston (4) and a displacement piston (3) which in each case are displaceable forwards and backwards on the axis of the cylinder (2) and in each case have a piston rod arrangement (20, 25) which are connected by means of in each case a linkage system (21-24 and 17-19 respectively) through connecting rods (17, 21) to two parallel cranks (9) rotating synchronously in opposite directions such that the displacement piston is moved offset in phase to the working piston, characterised in that the linkage system (21-24) of the working piston (4) comprises a frame element (24) which is connected rigidly to its piston rod arrangement (25) and exhibits at least four journals (22, 23) which are disposed symmetrically with the axis of the cylinder in a common plane at right-angles to the axis of the cylinder and aligned parallel with the crankshafts (9) and to which in each case a connecting rod (21) is articulated, in that the linkage system (17-19) and/or the piston rod arrangement (20) of the displacement piston (3) is or are passed through the frame element (24) and in that the cranks take the form of crankshafts (9) to which the connecting rods (17, 21) are in each case attached at a crank (16, 14, 15) which are in each case disposed between two crankshaft bearings (11, 12).

2. Energy converter according to claim 1, characterised in that the cranks (14 and 16, 15 respectively) of the crankshafts (9) connected to the linkage system (21-24) of the working piston (4) and to the linkage system of the displacement piston (3) are offset at an angle to one another.

3. Energy converter according to claim 1 or 2, characterised in that the piston rod arrangement (25) of the working piston (4) exhibits two piston rods which are secured to the working piston (4) symmetrically with the axis of the cylinder.

4. Energy converter according to one of claims 1 to 3, characterised in that the linkage systems and crankshafts together with a generator connected to both crankshafts or each generator connected to the crankshafts are disposed in a sealed overall housing which is filled with the gas with which the energy converter works.

5. Energy converter according to one of claims 1 to 4, characterised in that all the named bearings (10-13, 14-16, 18, 22, 23) are permanently lubricated roller bearings or needle roller bearings.

## Revendications

1. Convertisseur d'énergie selon le principe du moteur à air chaud (moteur Stirling, moteur Erisccon), qui comporte un cylindre (2), contenant un piston de travail (4) et un piston déplaceur (3), qui sont mobiles respectivement en avant et en arrière sur l'axe du cylindre (2) et possèdent respectivement un dispositif de tiges de piston (20, 25), qui sont reliées au moyen respectivement d'un système articulé (21-24 ou 17-19) par des bielles (17, 21) à deux manivelles (9) parallèles, (vilebrequin) tournant de manière synchrone dans deux directions opposées, de façon que le piston déplaceur se déplace déphasé par rapport au piston de travail, caractérisé en ce que :
- le système articulé (21, 24) du piston de travail (4) comporte un élément de cadre (24) rigidement relié à son dispositif de tiges de piston (25), élément de cadre qui comprend au moins quatre tourillons (22, 23), disposés symétriquement par rapport à l'axe du cylindre dans un plan commun orthogonal par rapport à l'axe du cylindre et dirigés parallèlement aux vilebrequins (9) et sur lesquels est articulée une bielle (21), en ce que le système articulé (17, 19) et/ou le dispositif de tiges de piston (20) du piston déplaceur (3) est ou sont guidés à travers l'élément de cadre (24) et,
- en ce que les manivelles sont formées en vilebrequins (9) sur lesquels agissent les bielles (17, 21) respectivement sur un coude (16, 14, 15), placé entre deux paliers de vilebrequins (11, 12).

2. Convertisseur d'énergie selon la revendication 1, caractérisé en ce que les coudes (14, ou 16 et 15) des vilebrequins(9) reliés au système articulé (21-24) du piston de travail (4) et reliées au système articulé du piston déplaceur (3) sont décalés angulairement les uns par rapport aux autres.

3. Convertisseur d'énergie selon les revendications 1 ou 2, caractérisé en ce que le dispositif de tiges de piston (25) du piston de travail (4) comporte deux tiges de piston, qui sont fixées au piston de travail (4) symétriquement par rapport à l'axe du cylindre.

4. Convertisseur d'énergie selon les revendications 1 ou 2, caractérisé en ce que les systèmes articulés et les vilebrequins sont disposés ensemble avec un générateur relié aux deux vilebrequins ou chacun d'eux avec un générateur relié aux vilebrequins dans un boîtier d'ensemble étanche, qui est rempli de gaz, avec lequel travaille le convertisseur d'énergie.

5. Convertisseur d'énergie selon une des revendications 1 à 4, caractérisé en ce que tous les paliers nommés (10-13, 14-16, 18, 22, 23) sont des paliers à rouleaux ou des paliers à aiguilles à graissage permanent.
